(19) Europäisches Patentamt

European Patent Office

Office européen des brevets

(11) **EP 1 734 779 A2**

(12) **EUROPEAN PATENT APPLICATION**

(43) Date of publication:
    **20.12.2006 Bulletin 2006/51**

(51) Int Cl.:
    **H04Q 7/38** (2006.01)

(21) Application number: **06012301.5**

(22) Date of filing: **14.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **14.06.2005 KR 20050050984**
            **31.10.2005 KR 20050103232**

(71) Applicant: **Samsung Electronics Co., Ltd.**
    **Yeongtong-gu**
    **Suwon-si, Gyeonggi-do (KR)**

(72) Inventors:
  • **Kim, Jong-In**
    **Yeongtong-gu,**
    **Suwon-si,**
    **Gyeonggi-do (KR)**
  • **Kwon, Young-Hoon**
    **Yeongtong-gu,**
    **Suwon-si,**
    **Gyeonggi-do (KR)**
  • **Hwang, Sung-Soo**
    **Yeongtong-gu,**
    **Suwon-si,**
    **Gyeonggi-do (KR)**

  • **Yoon, Soon-Young**
    **Yeongtong-gu,**
    **Suwon-si,**
    **Gyeonggi-do (KR)**
  • **Kim, Yong-Seok**
    **Yeongtong-gu,**
    **Suwon-si,**
    **Gyeonggi-do (KR)**
  • **Choi, Soong-Yoon**
    **Yeongtong-gu,**
    **Suwon-si,**
    **Gyeonggi-do (KR)**
  • **Han, Ki-Young**
    **Yeongtong-gu,**
    **Suwon-si,**
    **Gyeonggi-do (KR)**
  • **Hwang, Keun-Chul**
    **Yeongtong-gu,**
    **Suwon-si,**
    **Gyeonggi-do (KR)**

(74) Representative: **Grünecker, Kinkeldey,**
    **Stockmair & Schwanhäusser**
    **Anwaltssozietät**
    **Maximilianstrasse 58**
    **80538 München (DE)**

(54) **Method for performing handover in a mobile communication system**

(57)    Disclosed is a method for determining handover of a mobile station by a mobile station in a mobile communication system. The method includes measuring a downlink reference signal intensity of a serving base station; determining to perform scanning for measurement of reference signal intensities of the serving base station and neighbor base stations, when the measured downlink reference signal intensity of the serving base station is less than a reference value, negotiating with the serving base station for a scanning period and the number of scanning repetitions, measuring the reference signal intensities of the serving base station and the neighbor base stations, and resetting the reference value when a reference signal intensity of the serving base station is greater than or equal to reference signal intensities of neighbor base stations.

FIG.3

Printed by Jouve, 75001 PARIS (FR)

**Description**

**BACKGROUND OF THE INVENTION**

1. Field of the Invention

The present invention relates to a mobile communication system, and more particularly to a method for performing handover by a mobile station.

2. Description of the Related Art

Generally, in a mobile communication system having a cellular structure, a base station controls one cell and provides mobile stations located within the cell. The cell may be divided into a plurality of sectors. Each mobile station may move from a current cell or sector that currently provides a service to the mobile station, to another cell or sector adjacent to the current cell or sector. According to such movement, the mobile station performs handover for interrupting the call connection with a serving base station of the current cell, and establishing call connection with a target base station of another cell. In the mobile communication system, the handover is an important consideration in relation to the communication quality of the mobile station and the service provided to the mobile station.

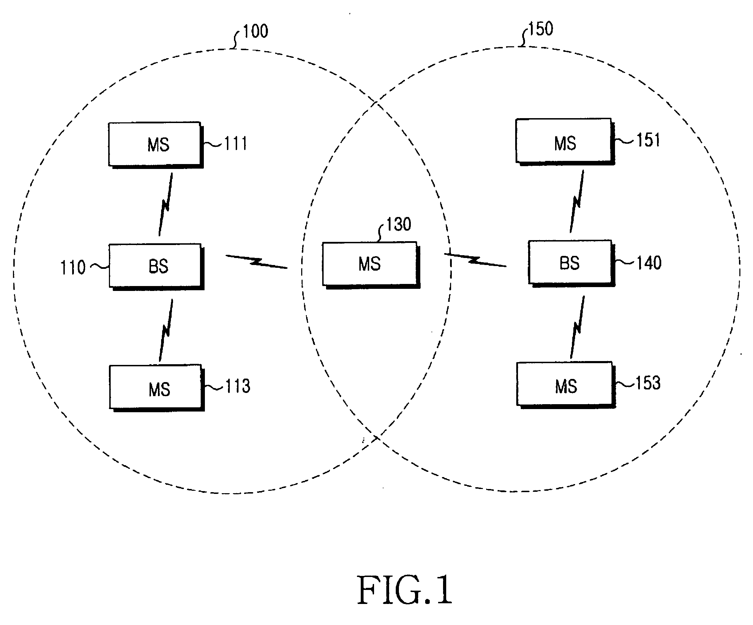

FIG. 1 is a block diagram schematically illustrating the structure of a mobile communication system in relation to conventional handover performed by a mobile station.

Referring to FIG. 1, the mobile communication system has a multi-cell structure which includes at least one cell. That is, the mobile communication system includes cells 100 and 150, a base station 110 for controlling the cell 100, and a base station 140 for controlling the cell 150. The base stations 100 and 150 provide services for a plurality of mobile stations 111, 113, 130, 151, and 153. The signal transmission/reception between the base stations and the mobile stations may be performed based on a Code Division Multiple Access (CDMA) scheme, an Orthogonal Frequency Division Multiplexing (OFDM) scheme, or an Orthogonal Frequency Division Multiple Access (OFDMA) scheme.

From among the mobile stations 111, 113, 130, 151, and 153, the mobile station 130 is located in the boundary area between the cell 100 and the cell 150, that is, in the handover area. Therefore, the mobile station 130 satisfies a predetermined handover condition and may thus perform handover to one of the cells.

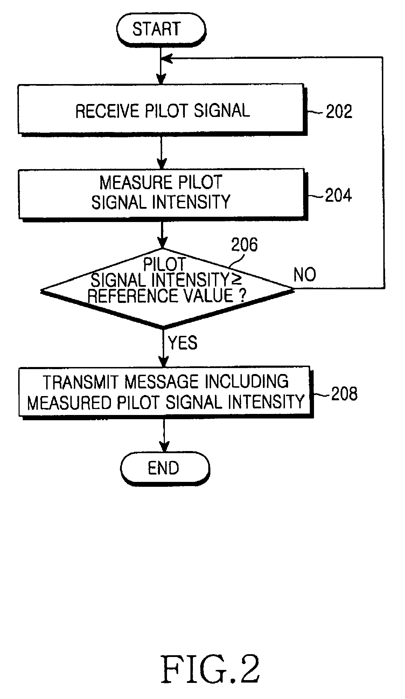

FIG. 2 is a flowchart of a process for handover performed by a mobile station in a conventional mobile communication system.

Referring to FIG. 2, first, in step 202, the mobile station receives pilot signals from the serving base station and neighbor base stations. Then, in step 204, the mobile station measures the intensity of the pilot signals from the serving base station and the neighbor base stations. In step 206, the mobile station determines whether the pilot signals from the serving base station and the neighbor base stations include a pilot signal which have an intensity larger than or equal to a predetermined reference value. When a pilot signal has an intensity larger than or equal to the predetermined reference value, the mobile station proceeds to step 208. In contrast, when all the intensities of the pilot signals are smaller than the predetermined reference value, the mobile station performs the steps from step 202 again. The reference value is a predetermined fixed value.

In step 208, the mobile station transmits a message including the measured pilot signal intensities and pseudo noise offset for identifying corresponding base stations to the serving base stations. Then, the serving base station receives the message, determines a target base station which satisfies the predetermined handover condition, and requests the mobile station to handover to the target base station.

According to the conventional handover process as described above, a mobile station measures intensities of pilot signals from neighbor base stations around the mobile station, and transmits a message, which includes information about a neighbor base station, from which the mobile station receives a pilot signal exceeding a predetermined reference value, and the intensity of the pilot signal from the neighbor base station, to a serving base station. The serving base station determines, based on the message from the mobile station, a target base station to which the mobile station will handover, and requests handover of the mobile station by reporting the determined target base station to the mobile station. According to the request for the handover from the serving base station, the mobile station performs the handover to the target base station.

Therefore, in the conventional mobile communication system, in order to determine the handover, a mobile station must periodically receive pilot signals from the serving base station and neighbor base stations and measure the intensities of the received pilot signals. In other words, the operation quantity for the continuous and periodic measurement of the intensities of the pilot signals may act as a load on the mobile station. Therefore, measurement of the intensities of the pilot signals when it is unnecessary for the mobile station to perform handover may serve as an unnecessary function of the mobile station.

Therefore, there a need for a new handover scheme and a reference value adjustment scheme corresponding to the new handover scheme, which can reduce the operation quantity due to the measurement of the intensities of the pilot signals by the mobile station.

## SUMMARY OF THE INVENTION

Accordingly, the present invention has been made to solve the above-mentioned problems occurring in the prior art, and an object of the present invention is to provide a method for handover in a mobile communication system, which can reduce the load or quantity of operations to be performed by a mobile station.

It is another object of the present invention to provide a method for handover in a mobile communication system, in which a base station requests a mobile station to measure the intensities of pilot signals according to communication quality information, so that it is possible to reduce the workload of the mobile station.

It is still another object of the present invention to provide a method for adjustment of a reference value necessary for determination of handover in a mobile communication system.

In order to accomplish this object, there is provided a method for determining handover of a mobile station by a serving base station in a mobile communication system, including measuring a channel state between the mobile station and the serving base station, comparing the measured channel state with a reference level and determining whether to request the mobile station to measure a signal intensity of at least one neighbor base station according to the comparison;, receiving a report from the mobile station about reference signal intensities between the mobile station and a plurality of base stations, and lowering the predetermined reference level when a reference signal intensity of the serving base station is higher than or equal to reference signal intensities of neighbor base stations other than the serving base station.

In accordance with another aspect of the present invention, there is provided a method for determining handover of a mobile station by a mobile station in a mobile communication system, including measuring a downlink reference signal intensity of a serving base station, determining to perform scanning for measurement of reference signal intensities of the serving base station and neighbor base stations, when the measured downlink reference signal intensity of the serving base station is smaller than a predetermined reference value, measuring the reference signal intensities of the serving base station and the neighbor base stations, and resetting the reference value when a reference signal intensity of the serving base station is higher than or equal to reference signal intensities of neighbor base stations.

## BRIEF DESCRIPTION OF THE DRAWINGS

The above and other objects, features and advantages of the present invention will be more apparent from the following detailed description taken in conjunction with the accompanying drawings, in which:

FIG. 1 is a block diagram schematically illustrating the structure of a mobile communication system in relation to conventional handover performed by a mobile station;

FIG. 2 is a flowchart of a process for handover performed by a mobile station in a conventional mobile communication system;

FIG. 3 is a flowchart illustrating a handover process performed by a mobile station according to the first embodiment of the present invention;

FIG. 4 is a flowchart of a process for determining handover of the mobile station by the serving base station according to the first embodiment of the present invention;

FIG. 5 is a graph illustrating the change in the signal intensities of the base stations while the serving base station requests the mobile station to measure and report the intensities of the pilot signals according to the first embodiment of the present invention;

FIG. 6 is a graph illustrating a process for adaptive down-adjustment of a reference value by a serving base station according to a second embodiment of the present invention;

FIG. 7 is a graph illustrating a process for adaptive up-adjustment of the reference value by the serving base station according to the second embodiment of the present invention;

FIG. 8 is a graph illustrating a process for setting a reference value in consideration of a preset hysterisis range by the serving base station according to the second embodiment of the present invention;

FIG. 9 is a signal flowchart illustrating signal flow between a mobile station and a serving base station for adjustment of a reference value and measurement of pilot signal intensities according to the present invention;

FIG. 10 is a flowchart of a process for adjustment of the reference value and request for the measurement of the pilot signal intensities by the serving base station according to the present invention; and

FIG. 11 is a flowchart of a process for the reference value adjustment and handover by the mobile station according to a third embodiment of the present invention.

**DETAILED DESCRIPTION OF THE PREFERRED EMBODIMENT**

Hereinafter, preferred embodiments of the present invention will be described with reference to the accompanying drawings. In the following description, a detailed description of known functions and configurations incorporated herein will be omitted for the sake of clarity and conciseness.

The present invention provides a scheme which can reduce the quantity of operations necessary for measurement of pilot signal intensities during a handover process in a mobile communication system. Specifically, according to the first embodiment of the present invention, a mobile station measures pilot signals only when there is a request from a base station, so that it is possible to reduce the number of times by which the pilot signals are measured, in comparison with the conventional method wherein the pilot signals are periodically measured. Further, according to the second embodiment of the present invention, the reference value for request for measurement of pilot signals, which is a fixed value in the conventional method, is adaptively changeable, so as to reduce the number of times for measurement of the pilot signals, further to the first embodiment. The reference value may be either a pilot signal intensity value or a communication quality value newly proposed by the present invention. Further, instead of requesting a report for measured pilot signal intensities, the base station may request measurement and report of communication quality. Correspondingly, the mobile station also can measure and report the communication quality, instead of the pilot signal intensities. Further, according to the third embodiment of the present invention, the mobile station can determine whether to measure the pilot signal intensities, and can adaptively determine the reference value based on the measured pilot signal intensities.

In the downlink, it is possible to express the communication quality by using the Channel Quality Information (CQI) obtained from periodic measurement of the pilot signals of the serving base station by the mobile station. Further, in the uplink, it is possible to express the communication quality by using headroom information, which corresponds to the difference between the current transmission power and the maximum transmissible power by the mobile station, or a Modulation and Coding Scheme (MCS) level selected by the mobile station from among the MCS level groups recommended by the serving base station. Based on the communication quality measured in consideration of both the uplink and the downlink, the base station can request the mobile station to measure and report the pilot signal intensities.

The MCS level refers to combination of modulation schemes and coding schemes, and it is possible to define multiple MCS levels from level 1 to level N according to the number of MCSs. That is, the MCS level is adaptively determined according to the channel state between the mobile station and the base station. When the channel state between the mobile station and the base station is good, it is possible to use a high MCS level, such as 64 Quadrature Amplitude Modulation (QAM) and 5/6 code rate. In contrast, when the channel state between the mobile station and the base station is poor, it is possible to use a low MCS level, such as Quadrature Phase Shift Keying (QPSK) and 1/12 code rate.

Further, the mobile station either may use an MCS level determined by the serving base station or select one of the MCS levels recommended by the serving base station. When the mobile station uses an MCS level determined by the serving base station, it is of course unnecessary for the mobile station to transmit the MCS level to the base station as communication quality information. However, when the mobile station selects one of the MCS levels recommended by the serving base station, the mobile station must report the selected MCS level to the serving base station.

The mobile station transmits the communication quality information including the CQI and headroom information to the serving base station, and the serving base station requests the mobile station to measure the pilot signal intensities in consideration of the CQI and headroom information. Also, the mobile station may transmit the communication quality information, which includes the CQI, headroom information, and MCS level, to the serving base station, and the serving base station may then request the mobile station to measure the pilot signal intensities in consideration of the CQI, headroom information, and MCS level.

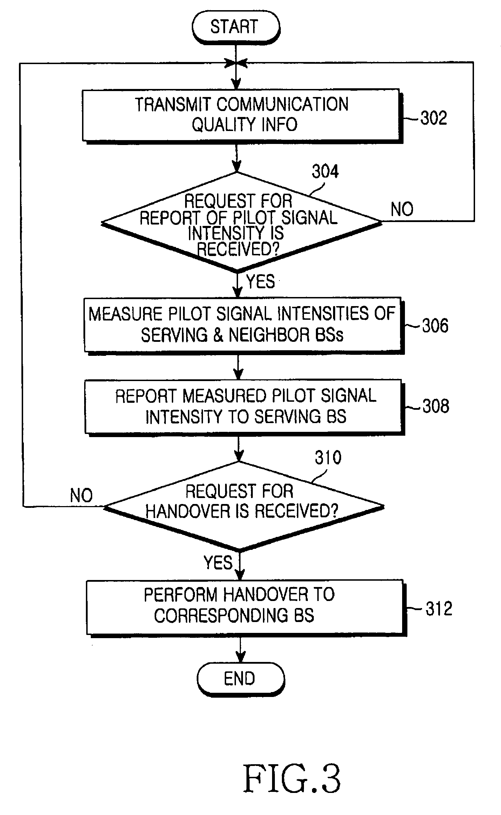

FIG. 3 is a flowchart illustrating a handover process performed by a mobile station according to the first embodiment of the present invention.

Referring to FIG. 3, in step 302, the mobile station transmits information of communication quality to the serving base station. The information of communication quality may be either a combination of CQI and headroom information or a combination of CQI, headroom, and MCS level. Then, in step 304, it is determined whether the mobile station has received a request from the serving base station to measure and report the intensities of the pilot signals transmitted from the serving base station and neighbor base stations. When the mobile station has received such a request, the mobile station proceeds to step 306.

In step 306, according to the request from the serving base station to measure and report the intensities of the pilot signals, the mobile station measures the intensities of the pilot signals transmitted from the serving base station and neighbor base stations. Then, in step 308, the mobile station reports the measured intensities of the pilot signals to the serving base station and then proceeds to step 310. The intensity of the pilot signal can be measured by using a Carrier to Interference and Noise Ratio (CINR). In step 310, the mobile station determines whether the mobile station receives from the serving base station a request to perform handover from the serving base station to another neighbor base station. When the mobile station has received the request, the mobile station proceeds to step 312 and performs handover to the neighbor base station appointed by the serving base station. When the mobile station has not received such a request, the mobile station performs the process again from step 302.

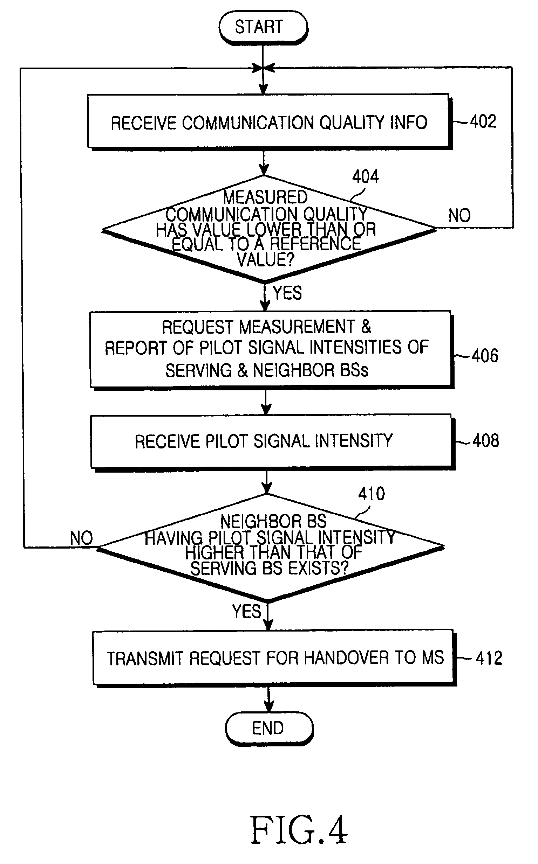

FIG. 4 is a flowchart of a process for determining handover of the mobile station by the serving base station according to the first embodiment of the present invention.

Referring to FIG. 4, in step 402, the serving base station receives the information about the communication quality from the mobile station. Then, in step 404, the serving base station determines whether the value of the information about the communication quality is lower than or equal to a predetermined reference value. The serving base station proceeds to step 406 when the value of the information about the communication quality is lower than or equal to the predetermined reference value, and proceeds to step 402 when the value of the information about the communication quality is higher than the predetermined reference value. In step 406, the serving base station sends a request to the mobile station to measure and report the intensities of the pilot signals transmitted from the serving base station and neighbor base stations. Then, in step 408, the serving base station receives, from the mobile station, information about the intensities of the pilot signals of the serving base station and the neighbor base stations. Then, in step 410, the serving base station determines whether there is any neighbor base station showing a pilot signal intensity stronger than the pilot signal intensity of the serving base station itself. As a result of the determination, when there is a neighbor base station showing a pilot signal intensity stronger than the pilot signal intensity of the serving base station, the serving base station proceeds to step 412. In contrast, when there is no neighbor base station which shows a pilot signal intensity stronger than the pilot signal intensity of the serving base station, the serving base station performs the process again from step 402. In step 412, the serving base station requests the mobile station to perform handover from the serving base station to a corresponding neighbor base station.

As described above, the mobile station according to the first embodiment of the present invention measures the intensities of the pilot signals or the communication quality only when there is a request from the base station. Therefore, the present invention can reduce unnecessary signaling.

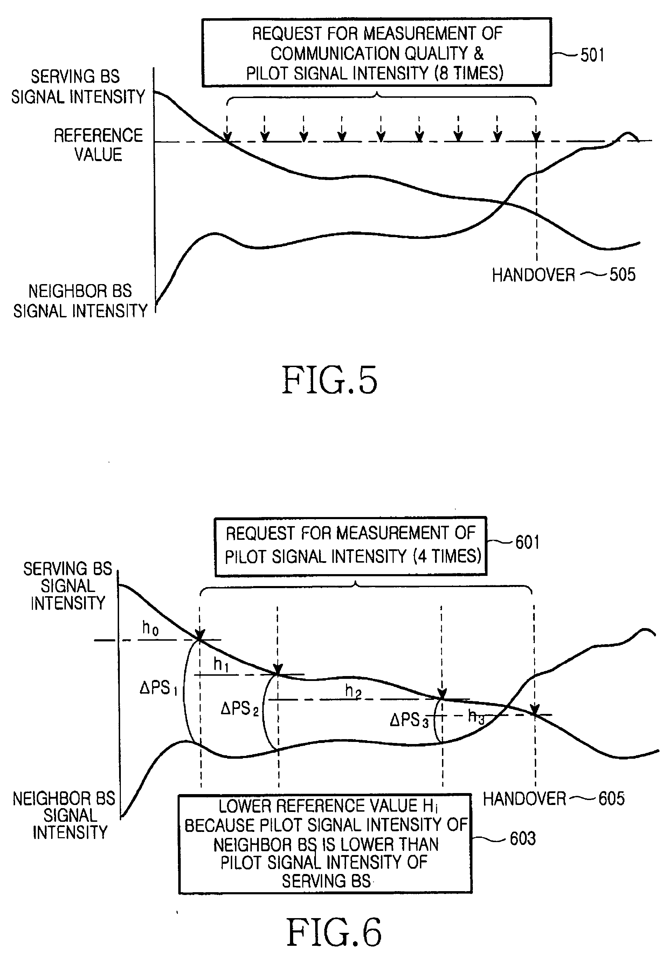

FIG. 5 is a graph illustrating the change in the signal intensities of the base stations while the serving base station requests the mobile station to measure and report the intensities of the pilot signals according to the first embodiment of the present invention.

Referring to FIG. 5, the serving base station measures the communication quality in consideration of the uplink and the downlink (step 501). The measurement of the communication quality by the serving base station implies that the serving base station determines a communication quality value in consideration of the quality of the signal received through an uplink channel and downlink channel information fed back by the mobile station. For example, the serving base station may take a combination of CQI, headroom and MCS level information into account in order to determine the communication quality value.

When the measured communication quality value is lower than or equal to a predetermined reference value, the serving base station requests the mobile station to measure the intensities of the pilot signals of the serving base station and the neighbor base stations (step 501). When the serving base station receives a report about the pilot signal intensities instead of the communication quality information from the mobile station, the reference value is a value corresponding to a reference pilot signal intensity.

In response to the request of the serving base station for measurement of the serving base station, the mobile station measures the intensities of the pilot signals of the serving base station and the neighbor base stations and reports the measured intensities to the serving base station.

The serving base station determines whether each of the intensities of the pilot signals of the neighbor base stations reported by the mobile station is larger than the intensity of the pilot signal of the serving base station. Referring to FIG. 5, it is noted that the intensity of the pilot signal of a neighbor base station is weaker than the intensity of the pilot signal of the serving base station at the initial stage. Therefore, the serving base station repeatedly measures the communication quality at a predetermined time interval and requests the mobile station to measure and report the intensities of the pilot signals of the serving base station and the neighbor base station when the measured communication quality is below a predetermined level (step 501). This operation is repeated until the intensity of the pilot signal of the neighbor base station becomes higher than the intensity of the pilot signal of the serving base station. After the intensity of the pilot signal of the neighbor base station becomes higher than the intensity of the pilot signal of the serving base station, the mobile station performs a handover from the serving base station to the neighbor base station in response to a request of the serving base station for the handover (step 505).

FIG. 6 is a graph illustrating a process for adaptive down-adjustment of a reference value by a serving base station according to the second embodiment of the present invention.

Referring to FIG. 6, the serving base station measures the communication quality of the mobile station for both the uplink and the downlink, and requests the mobile station to measure the intensities of the pilot signals from the serving base station and the neighbor base stations when the measured communication quality is lower than a predetermined maximum reference level (step 601).

In response to the request from the serving base station for the measurement of the pilot signal intensities, the mobile station measures the intensities of the pilot signals from the serving base station and the neighbor base stations and reports the measured intensities to the serving base station.

Then, the serving base station determines whether a pilot signal intensity of a neighbor base station is higher than the pilot signal intensity of the serving base station. When the pilot signal intensity of the neighbor base station is higher than the pilot signal intensity of the serving base station, the serving base station lowers the maximum reference value $h_0$. The lowered reference value is determined by a function of the difference $\Delta PS_i$ between the pilot signal intensity of the serving base station and the pilot signal intensity of the neighbor base station, as defined by Equation (1) below.

$$h_i = h_{i-1} - \lambda_1 \cdot \Delta PS_i, \ 0 < \lambda_1 < 1, \ i = 1, 2, \cdots \qquad \ldots\ldots\ldots (1)$$

In Equation (1), $h_i$ refers to the reference value obtained after i times of adjustment, and $\lambda_1$ refers to a proportional constant applied in the case of lowering the reference value.

The serving base station replaces the maximum reference value $h_0$ with the new reference value $h_1$ determined by Equation (1), thereby setting the new reference value $h_1$ as the reference value for the communication quality comparison. Then, the serving base station repeatedly measures the communication quality at a predetermined time interval. When the re-measured communication quality has a value lower than the new reference value $h_1$, the serving base station sets the second reference value $h_2$ by using Equation (1).

Accordingly, the serving base station in the second embodiment of the present invention performs the measurement of communication quality, comparison of the current reference value with the measured communication quality, request for measurement of the pilot signal intensities according to the result of the comparison, and reset of the reference value according to the measured pilot signal intensities (step 603). It is noted that the serving base station requests eight times the mobile station to measure the pilot signal intensities in the embodiment shown in FIG. 5 while the request is made only four times in the embodiment shown in FIG. 6. Therefore, the second embodiment of the present invention can reduce the quantity of operations which must be performed by the mobile station for the measurement of the pilot signal intensities, in comparison with the first embodiment of the present invention.

In the meantime, although the serving base station adaptively lowers the reference value for the measurement of the pilot signal intensities according to the channel states in the embodiment shown in FIG. 6, it is of course possible to use Equation (1) or (2), to be described below, when the mobile station adaptively adjusts the reference value.

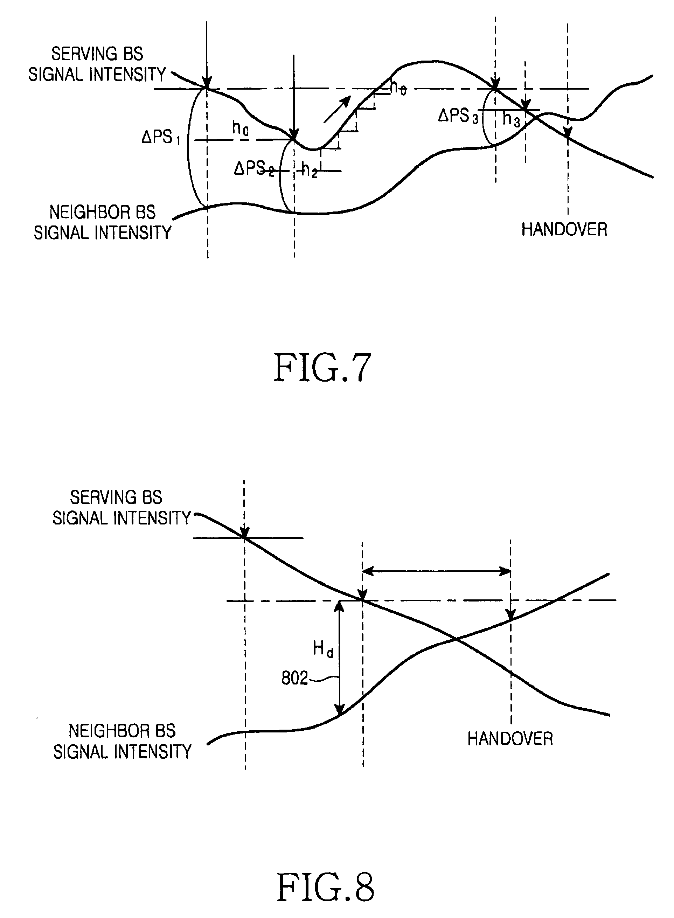

FIG. 7 is a graph illustrating a process for adaptive up-adjustment of the reference value by the serving base station according to the second embodiment of the present invention.

Referring to FIG. 7, after the serving base station sets a new reference value lower than the maximum reference value in consideration of the pilot signal intensity(or communication quality) reported from the mobile station.. If the pilot signal intensity or communication quality is improved, the serving base station can raise the current reference value above the previous reference value by using Equation (2) below. That is, the serving base station determines a raised current reference value by adding a value corresponding to the difference between the previous communication quality and the current communication quality to the previous reference value. The current reference value cannot exceed the maximum reference value.

$$h_i = h_{i-1} + \lambda_2 \cdot \Delta TQ_i, \ 0 < \lambda_2 < 1, \ i = 1, 2, \cdots \qquad \ldots\ldots\ldots (2)$$

In Equation (2), $\Delta TQ_i$ refers to a function value corresponding to the difference between the communication quality measured at the i-th time and the communication quality measured at the (i-1)-th time, and $\lambda_2$ refers to a proportional constant applied in the case of raising the reference value.

As described above, the serving base station can reduce the number of times by which the serving base station requests the mobile station to measure the pilot signal intensities, by adaptively adjusting the predetermined maximum reference value according to the channel state.

FIG. 8 is a graph illustrating a process for setting a reference value in consideration of a preset hysterisis range by the serving base station according to the second embodiment of the present invention.

As a premise to the description with reference to FIG. 8, the serving base station cannot raise the reference value above the maximum reference value. Further, the serving base station is allowed to lower the reference value only according to a predetermined standard. In the present invention, the lowered reference value can be determined based on a hysterisis range and a minimum reference value.

Referring to FIG. 8, when the difference between the pilot signal intensity of the serving base station and the pilot signal intensities of the neighbor base stations has a value within a predetermined hysterisis range $H_d$ 802, the serving base station does not lower the reference value $h_i$ any more. Further, the serving base station re-measures the communication quality after a predetermined time period T passes, in order to prevent the lowered reference value from converging toward the point at which the pilot signal intensity of the serving base station and the pilot signal intensity of the neighbor base station intersect each other. Unless the hysterisis range is taken into account, the lowered reference value must be set to be always higher than a predetermined minimum reference value.

Either upon detecting that the mobile station will perform handover or periodically, the serving base station reports through a backbone message the most newly set reference value to the neighbor base stations or the target base station to which the mobile station will handover. By this process, the neighbor base stations or the target base station can reduce the number of times by which they require the mobile station to measure the pilot signal intensities.

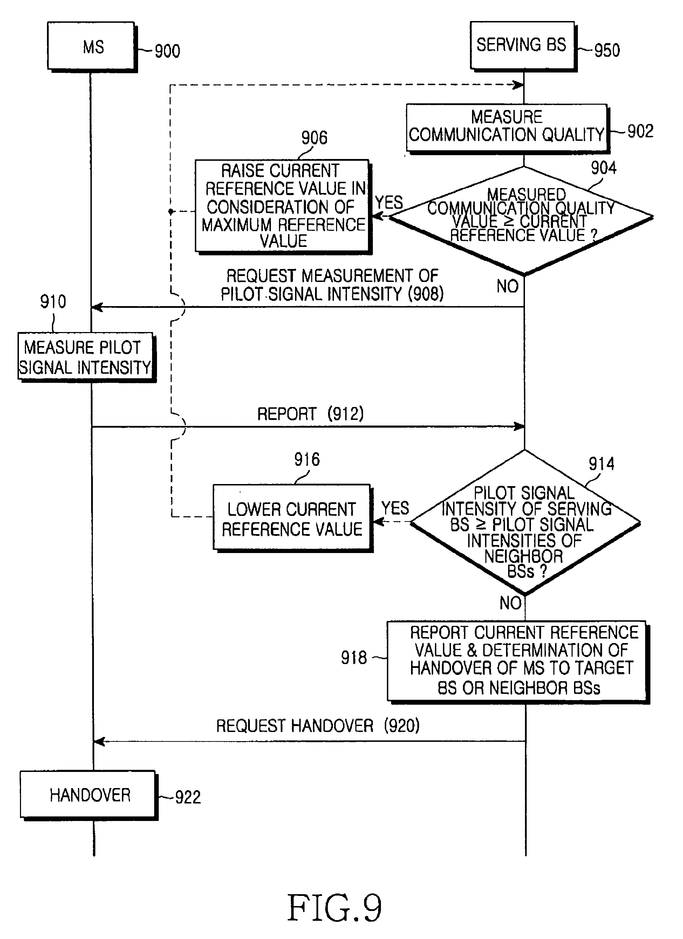

FIG. 9 is a signal flowchart illustrating signal flow between a mobile station and a serving base station for adjustment of a reference value and measurement of pilot signal intensities according to the present invention.

Referring to FIG. 9, the serving base station 950 measures the communication quality of the mobile station (step 902). Then, the serving base station 950 determines whether the measured communication quality has a value higher than or equal to a current reference value (step 904). As a result of the comparison, when the measured communication quality has a value higher than or equal to the current reference value, the serving base station raises the current reference value by using Equation (2) in consideration of the maximum reference value (step 906), and measures the communication quality again after passage of a predetermined time interval (step 902). However, when the measured communication quality value is lower than the current reference value, the serving base station 950 requests the mobile station 900 to measure the intensities of the pilot signals of the serving base station and the neighbor base stations (step 908). Meanwhile, the serving base station 950 compares the current communication quality with the previous communication quality, and can raise the reference value by using Equation (2) when the current communication quality is better than the previous communication quality.

In response to the request from the serving base station 950, the mobile station 900 measures the intensities of the pilot signals of the serving base station 950 and the neighbor base stations (step 910), and reports the measured intensities the pilot signals of the base stations to the serving base station 950 (step 912).

Based on the pilot signal intensities reported by the mobile station 900, the serving base station 950 determines whether its own pilot signal intensity is greater than or equal to the pilot signal intensities of the neighbor base stations (step 914). As a result of the determination, when the pilot signal intensity of the serving base station is greater than or equal to the pilot signal intensities of the neighbor base stations, the serving base station lowers the current reference value (step 916) and measures the communication quality after passage of a predetermined time interval (step 902). However, when the pilot signal intensity of the serving base station is lower than one of the pilot signal intensities of the neighbor base stations, the serving base station recognizes that it is necessary for the mobile station 900 to handover to a corresponding neighbor base station. Then, the serving base station 950 reports to all of the neighbor base stations or only the corresponding target base station the current reference value set in the serving base station together with the necessity for the mobile station 900 to perform the handover (step 918). Further, the serving base station 950 requests the mobile station 900 to perform the handover (step 920).

Then, the mobile station 900 performs the handover process in response to the request for the handover by the serving base station 950 (step 922).

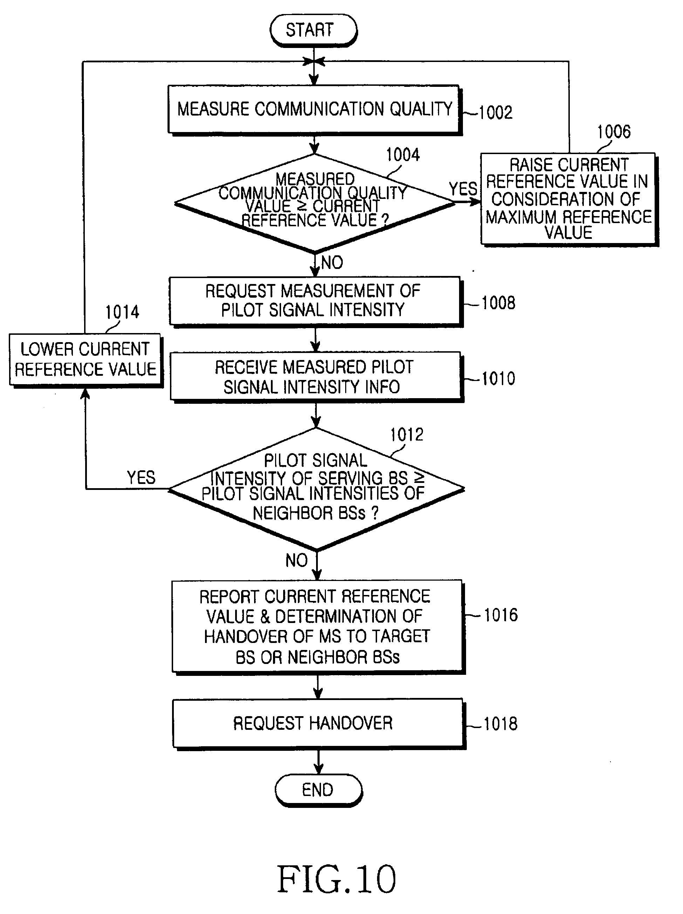

FIG. 10 is a flowchart of a process for adjustment of the reference value and request for the measurement of the pilot signal intensities by the serving base station according to the present invention.

Referring to FIG. 10, in step 1002, the serving base station measures the communication quality of the mobile station in consideration of both the uplink and the downlink. Then, in step 1004, the serving base station compares the measured communication quality with the current reference value. As a result of the comparison, when the measured communication quality has a value higher than or equal to the current reference value, the serving base station proceeds to step 1006, in which the serving base station raises the current reference value to a value smaller than a predetermined maximum reference value. Then, the serving base station performs the process from step 1002 again.

However, when the measured communication quality has a value lower than the current reference value, the serving base station proceeds to step 1008, in which the serving base station requests the mobile station to measure the intensities of the serving base station and the neighbor base stations. Then, in step 1010, the serving base station receives the report of the measured pilot signal intensities of the base stations from the mobile station. In step 1012, based on the pilot signal intensities reported by the mobile station, the serving base station compares the pilot signal intensity between itself and the mobile station with the pilot signal intensity between the mobile station and each neighbor base station. As a result of the comparison, when the pilot signal intensity of the serving base station is stronger than or equal to the pilot signal intensities of the neighbor base stations, the serving base station proceeds to step 1014, in which the serving base station lowers the current reference value by using Equation (1). Then, the serving base station performs the process from step 1002 again. In determining the lowered reference value, the serving base station takes the predetermined hysterisis range or the minimum reference value.

As a result of the comparison in step 1012, when the pilot signal intensity of the serving base station is lower than pilot signal intensities of the neighbor base stations, the serving base station proceeds to step 1016, in which the serving base station recognizes that it is necessary for the mobile station to handover to a corresponding neighbor base station. Therefore, the serving base station reports to all of the neighbor base stations or only the corresponding target base station the current reference value set in the serving base station together with the necessity for the mobile station to perform the handover. Then, in step 1018, the serving base station requests the mobile station to perform the handover.

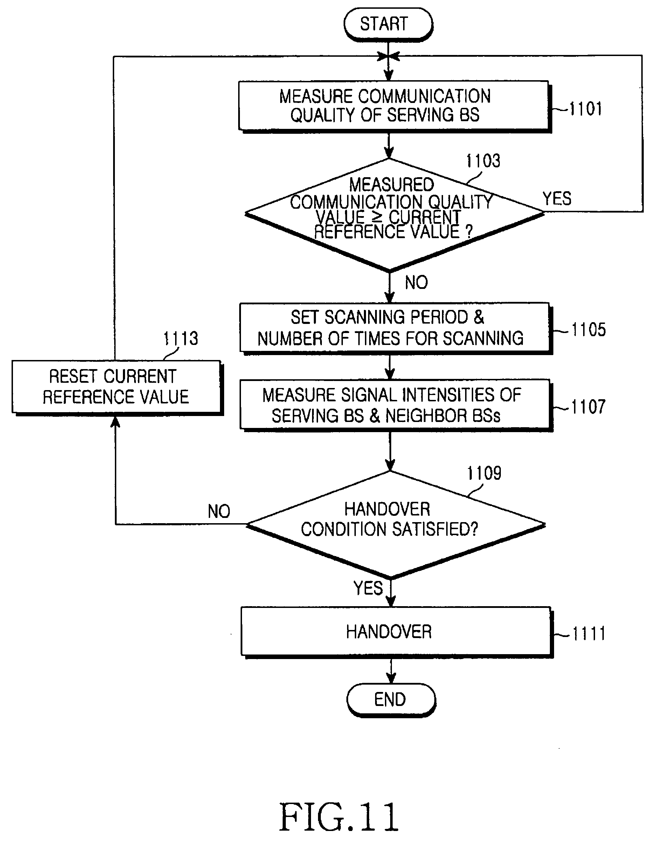

FIG. 11 is a flowchart of a process for the reference value adjustment and handover by the mobile station according to the third embodiment of the present invention.

Referring to FIG. 11, in step 1101, the mobile station measures the downlink signal intensity of the serving base station, that is, the communication quality. Then, in step 1103, the mobile station determines whether the measured communication quality has a value greater than or equal to the current reference value. As a result of the determination, when the measured communication quality has a value greater than or equal to the current reference value, the mobile station need not scan neighbor base stations and thus returns to step 1101. However, when the measured communication quality has a value lower than the current reference value, the mobile station recognizes that it is necessary to scan the serving base station and the neighbor base stations, and proceeds to step 1105.

In step 1105, the mobile station agrees with the serving base station about the scanning period and the number of scanning repetitions. In order to determine the scanning period and the number of scanning repetitions, the mobile station may perform negotiation with the serving base station.

Then, in step 1107, the mobile station measures the signal intensities of the serving base station and the neighbor base stations. In step 1109, the mobile station determines based on the measured signal intensities whether to perform the handover. When the signal intensity of a neighbor base station is higher than the signal intensity of the serving base station or when the signal intensity of the serving base station is lower than a predetermined handover threshold, the mobile station determines that it is necessary to perform the handover and proceeds to step 1111, in which the mobile station performs the handover.

However, when the condition for handover as described above is not satisfied, the mobile station proceeds to step 1113, in which the mobile station raises or lowers the current reference value. When the currently measured signal intensity of the serving base station is stronger than the previously measured signal intensity thereof, the mobile station raises the current reference value. In contrast, when the currently measured signal intensity of the serving base station is weaker than the previously measured signal intensity thereof and has a value higher than the current reference value, the mobile station sets a new reference value by lowering the current reference value.

As described above, in a mobile communication system according to the present invention, the serving base station can adaptively raise or lower the reference value for determining whether to make a request for measurement of the pilot signal intensities, so that the present invention can reduce the number of times by which the mobile station measures the pilot signal intensities of multiple base stations. As a result, the present invention can reduce the quantity of operations due to the measurement of the pilot signal intensities by the mobile station.

While the invention has been shown and described with reference to certain preferred embodiments thereof, it will be understood by those skilled in the art that various changes in form and details may be made therein without departing from the spirit and scope of the invention as defined by the appended claims.

**Claims**

1. A method for determining handover of a mobile station by a serving base station in a mobile communication system, the method comprising the steps of:

    (1) measuring a channel state between the mobile station and the serving base station;
    (2) comparing the measured channel state with a reference level and determining whether to request the mobile station to measure a signal intensity of at least one neighbor base station according to the comparison;
    (3) receiving a report from the mobile station about the signal intensity of the at least one neighbor base station; and
    (4) lowering the reference level when a signal intensity of the serving base station is higher than or equal to the signal intensity of the at least one neighbor base station.

2. The method as claimed in claim 1, wherein measuring a channel state in step (1) further comprises raising the reference level when the measured channel state is higher than or equal to the reference level.

3. The method as claimed in claim 1, wherein measurement of the channel state in step (1) is achieved by receiving a report of a measured pilot signal intensity from the mobile station.

4. The method as claimed in claim 1, wherein, in step (1), the channel state is determined based on a combination of headroom information, a Modulation and Coding Scheme (MCS) level selected by the mobile station, and channel quality information of the mobile station, the headroom information corresponding to a difference between a current transmission power and a maximum transmissible power by the mobile station.

5. The method as claimed in claim 1, wherein the reference level has a value between a maximum limit value for the raising of the reference level and a minimum limit value for the lowering of the reference level.

6. The method as claimed in claim 2, wherein the reference level is raised when the measured channel state is higher than or equal to the reference level and is stronger than a previously measured channel state.

7. The method as claimed in claim 1, wherein, in step (4), the reference level is lowered based on a previous reference level and a function of a difference between the signal intensity of the serving base station and the signal intensity of the at least one neighbor base station, as defined by

$$ h_i = h_{i-1} - \lambda_1 \cdot \Delta PS_i, \ 0 < \lambda_1 < 1, \ i = 1, 2, \cdots \ , $$

wherein $h_i$ denotes to the reference value obtained after i times of adjustment, $\lambda_1$ denotes a proportional constant applied in the case of lowering the reference value, and $\Delta PS_i$ denotes the function of the difference between the signal intensity of the serving base station and the signal intensity of the at least one neighbor base station.

8. The method as claimed in claim 2, wherein the reference level is raised based on a previous reference level and a value proportional to a difference between a previous channel state and a current channel state, as defined by

$$ h_i = h_{i-1} + \lambda_2 \cdot \Delta TQ_i, \ 0 < \lambda_2 < 1, \ i = 1, 2, \cdots \ , $$

wherein, $\Delta TQ_i$ denotes a function value corresponding to a difference between the channel state measured at an i-th time and the channel state measured at the (i-1)-th time, and $\lambda_2$ denotes a proportional constant applied when the reference value is raised.

9. The method as claimed in claim 1, further comprising requesting the mobile station to measure and report the signal intensity of the at least one base station when the measured channel state is lower than the reference level.

10. The method as claimed in claim 1, further comprising determining handover of the mobile station when the signal intensity of the serving base station is lower than the signal intensity of the at least one neighbor base station.

11. The method as claimed in claim 10, further comprising reporting a currently set reference level to a target base station, to which the mobile station will handover, when the signal intensity of the serving base station is lower than the signal intensity of the at least one neighbor base station.

12. The method as claimed in claim 10, further comprising broadcasting a currently set reference level to neighbor base stations when the reference signal intensity of the serving base station is lower than the reference signal intensity of the at least one neighbor base station.

13. The method as claimed in claim 1, wherein, in step (4), the reference level is not lowered when the difference between the signal intensity of the serving base station and the signal intensity of the at least one neighbor base station is less than a selected hysterisis range.

14. A method for determining handover of a mobile station by a mobile station in a mobile communication system, the method comprising the steps of:

measuring a downlink reference signal intensity of a serving base station;

determining whether to perform scanning for measurement of reference signal intensities of the serving base station and at least one neighbor base station, when the measured downlink reference signal intensity of the serving base station is less than a reference value;

measuring the reference signal intensities of the serving base station and the at least one neighbor base station; and

resetting the reference value when a reference signal intensity of the serving base station is higher than or equal to reference signal intensity of the at least one neighbor base station.

15. The method as claimed in claim 14, further comprises the step of reporting the measured reference signal intensities.

16. The method as claimed in claim 14, further comprises the step of negotiating with the serving base station for scanning to measure the reference signal after the determination to perform scanning.

17. The method as claimed in claim 16, wherein the negotiation with the serving base station is to determine a scanning duration and a scanning repetitions.

18. The method as claimed in claim 14, wherein the reference value has a value between a maximum limit value for the raising of the reference value and a minimum limit value for the lowering of the reference value.

19. The method as claimed in claim 14, further comprising determining handover of the mobile station when the reference signal intensity of the serving base station is lower than the reference signal intensity of the at least one neighbor base station.

20. The method as claimed in claim 14, wherein, in the step of resetting the reference value, the reference value is raised when the reference signal intensity of the serving base station currently measured by the mobile station is higher than or equal to the reference signal intensity of the serving base station previously measured by the mobile station.

21. The method as claimed in claim 14, wherein, in the step of resetting the reference value, the reference value is lowered when the reference signal intensity of the serving base station currently measured by the mobile station is higher than or equal to the reference signal intensity of the serving base station previously measured by the mobile station.

FIG.1

START

RECEIVE PILOT SIGNAL — 202

MEASURE PILOT
SIGNAL INTENSITY — 204

206
PILOT
SIGNAL INTENSITY ≥
REFERENCE VALUE ?    NO

YES

TRANSMIT MESSAGE INCLUDING
MEASURED PILOT SIGNAL INTENSITY — 208

END

FIG.2

```
                      ┌─────────────┐
                      │    START    │
                      └─────────────┘
                             │
        ┌────────────────────┼──────────────────────────────┐
        │                    ▼                               │
        │    ┌───────────────────────────────────┐           │
        │    │  TRANSMIT COMMUNICATION           │──302      │
        │    │  QUALITY INFO                     │           │
        │    └───────────────────────────────────┘           │
        │                    │                               │
        │                    ▼            304                │
        │            ◇─────────────────◇                     │
        │          REQUEST FOR                   NO          │
        │       REPORT OF PILOT SIGNAL ──────────────────────┘
        │          INTENSITY IS
        │            RECEIVED?
        │                    │ YES
        │                    ▼
        │    ┌───────────────────────────────────┐
        │    │  MEASURE PILOT SIGNAL INTENSITIES OF │──306
        │    │  SERVING & NEIGHBOR BSs           │
        │    └───────────────────────────────────┘
        │                    │
        │                    ▼
        │    ┌───────────────────────────────────┐
        │    │  REPORT MEASURED PILOT SIGNAL     │──308
        │    │  INTENSITY TO SERVING BS          │
        │    └───────────────────────────────────┘
        │                    │
        │                    ▼           310
        │  NO        ◇─────────────────◇
        └──────────   REQUEST FOR
                     HANDOVER IS RECEIVED?
                             │ YES
                             ▼
             ┌───────────────────────────────────┐
             │  PERFORM HANDOVER TO              │──312
             │  CORRESPONDING BS                 │
             └───────────────────────────────────┘
                             │
                             ▼
                      ┌─────────────┐
                      │     END     │
                      └─────────────┘
```

# FIG.3

START

RECEIVE COMMUNICATION QUALITY INFO — 402

MEASURED
COMMUNICATION QUALITY
HAS VALUE LOWER THAN OR
EQUAL TO A REFERENCE
VALUE?  — 404

NO

YES

REQUEST MEASUREMENT &
REPORT OF PILOT SIGNAL INTENSITIES OF
SERVING & NEIGHBOR BSs — 406

RECEIVE PILOT SIGNAL INTENSITY — 408

NEIGHBOR BS
HAVING PILOT SIGNAL INTENSITY
HIGHER THAN THAT OF
SERVING BS EXISTS? — 410

NO

YES

TRANSMIT REQUEST FOR HANDOVER TO MS — 412

END

FIG.4

SERVING BS
SIGNAL INTENSITY

REQUEST FOR MEASUREMENT OF
COMMUNICATION QUALITY &
PILOT SIGNAL INTENSITY (8 TIMES) ~501

REFERENCE
VALUE

NEIGHBOR BS
SIGNAL INTENSITY

HANDOVER ~505

# FIG.5

SERVING BS
SIGNAL
INTENSITY

REQUEST FOR MEASUREMENT OF
PILOT SIGNAL INTENSITY (4 TIMES) ~601

$h_0$

$h_1$

$\Delta PS_1$

$h_2$

$\Delta PS_2$

$\Delta PS_3$

$h_3$

NEIGHBOR BS
SIGNAL
INTENSITY

LOWER REFERENCE VALUE $H_i$
BECAUSE PILOT SIGNAL INTENSITY OF
NEIGHBOR BS IS LOWER THAN
PILOT SIGNAL INTENSITY OF
SERVING BS ~603

HANDOVER ~605

# FIG.6

SERVING BS
SIGNAL INTENSITY

$\Delta PS_1$

$h_0$

$h_0$

$\Delta PS_2$  $h_2$

$\Delta PS_3$  $h_3$

NEIGHBOR BS
SIGNAL INTENSITY

HANDOVER

# FIG.7

SERVING BS
SIGNAL INTENSITY

$H_d$

802

NEIGHBOR BS
SIGNAL INTENSITY

HANDOVER

# FIG.8

FIG.9

```
                    ┌─────────┐
                    │  START  │
                    └────┬────┘
                         │
  ┌──────────────────────┼──────────────────────────────┐
  │                      ↓                               │
  │       ┌──────────────────────────────┐              │
  │       │ MEASURE COMMUNICATION QUALITY │──1002        │
  │       └──────────────┬───────────────┘              │
  │                      │                          1006 │
  │                      ↓                               │
  │                  ╱────────────╲         ┌──────────────────────┐
  │                 ╱  MEASURED    ╲  YES   │ RAISE CURRENT        │
  │                ╱ COMMUNICATION  ╲──────→│ REFERENCE VALUE IN   │
  │                ╲ QUALITY VALUE ≥ ╱      │ CONSIDERATION OF     │
  │                 ╲CURRENT REFER- ╱       │ MAXIMUM REFERENCE    │
  │                  ╲ENCE VALUE ?╱         │ VALUE                │
  │                   ╲──────────╱          └──────────────────────┘
  │                      │ NO
  │                      ↓
  │       ┌──────────────────────────────┐
  │       │ REQUEST MEASUREMENT OF        │──1008
  │       │ PILOT SIGNAL INTENSITY        │
  │       └──────────────┬───────────────┘
  │   1014               │
  │  ┌──────────────┐    ↓
  │  │ LOWER CURRENT│  ┌──────────────────────────────┐
  └──│ REFERENCE    │  │ RECEIVE MEASURED PILOT        │──1010
     │ VALUE        │  │ SIGNAL INTENSITY INFO         │
     └──────────────┘  └──────────────┬───────────────┘
          ↑                           │        1012
          │                           ↓
          │                       ╱────────────╲
          │          YES         ╱ PILOT SIGNAL ╲
          └──────────────────────╲INTENSITY OF  ╱
                                  ╱SERVING BS ≥  ╲
                                  ╲PILOT SIGNAL  ╱
                                   ╲INTENSITIES ╱
                                   ╲OF NEIGHBOR╱
                                    ╲  BSs ? ╱
                                     ╲──────╱
                                        │ NO
                                        ↓
                         ┌──────────────────────────────┐
                         │ REPORT CURRENT REFERENCE      │──1016
                         │ VALUE & DETERMINATION OF      │
                         │ HANDOVER OF MS TO TARGET      │
                         │ BS OR NEIGHBOR BSs            │
                         └──────────────┬───────────────┘
                                        │
                                        ↓
                         ┌──────────────────────────────┐
                         │     REQUEST HANDOVER          │──1018
                         └──────────────┬───────────────┘
                                        │
                                        ↓
                                   ┌─────────┐
                                   │   END   │
                                   └─────────┘
```

# FIG.10

FIG.11